# EUROPEAN PATENT APPLICATION

(11) **EP 1 796 387 A1**
(43) Date of publication of application: **13.06.2007**
(21) Application number: 05785961.3
(22) Date of filing: 20.09.2005
(51) Int. Cl.: H04N 5/93, G09G 5/00, G11B 27/00, G11B 27/34, H04N 5/76

(54) **VIDEO DISPLAY APPARATUS, VIDEO DISPLAY METHOD, AND VIDEO DISPLAY PROGRAM**

(30) Priority: 21.09.2004 JP 2004273752
(71) Applicant: Pioneer Corporation, Tokyo 1538654 (JP)
(72) Inventor: NAKAMURA, Takeshi, c/o Corporate R & D Lab., Tsurugashima-shi, Saitama 350-2288 (JP); TADA, Kenichiro, c/o Pioneer Corporation, Tokorozawa-shi, Saitama 359-8522 (JP); HASHIMOTO, Shinya, c/o Pioneer Corporation, Tokorozawa-shi, Saitama 359-8522 (JP)
(74) Representative: Haley, Stephen
(86) International application number: PCT/JP2005/017301
(87) International publication number: WO 2006/033329

(57) **Abstract**

An image display apparatus according to the present invention includes a reproduction unit (101), a display screen (102), and a display control unit (103), and the reproduction unit (101) reproduces at least a part of image data of an image content in a shorter time than a reproduction time of the image content. The display control unit (103) controls the display screen (102) to display reproduction state information on a state of reproduction of the image data by the reproduction unit (101) in an associated manner with identification information to identify the image content.

## Description

### TECHNICAL FIELD

The present invention relates to an image display apparatus, an image display method, and an image display program. However, a use of the present invention is not limited to the above image display apparatus, the image display method, and the image display program.

### BACKGROUND ART

DVD+HDD recorders that record broadcasted programs on an HDD or a DVD are expected to be equipped with a summary function in the future. Summary reproduction techniques include a technique in which a portion where background music is quiet (silent interval) and a portion where background music is noisy (noise interval) are captured from the content to create a summary video (For example, Patent Document 1). Moreover, there is also a technique in which viewer evaluation of the content is recorded and based on evaluation values of the recorded viewer evaluation, a content list is displayed according to a feeling desired after viewing the content (For example, Patent Document 2).

Patent Document 1: Japanese Patent Laid-Open Publication No. 2003-88728
Patent Document 2: Japanese Patent Laid-Open Publication No. 2003-209523

### DISCLOSURE OF INVENTION

### PROBLEM TO BE SOLVED BY THE INVENTION

However, an example of a problem concerning the above conventional technique is in the case of summary reproduction of unviewed content. Although only summary reproduction has been performed, the content is misrecognized as content that has already been played in its entirety. Hence, while an outline of the content is grasped through summary reproduction, the content has not been viewed carefully enough to be understood.

Moreover, in the above conventional technique, since indication of the viewing state does not change from an unviewed state and such a history of the content for which an outline has been confirmed through summary reproduction is not recorded nor displayed anywhere, a problem arises, such as the viewer cannot easily recognize for which content the summary reproduction has already been performed.

### MEANS FOR SOLVING PROBLEM

An image display apparatus according to claim 1 includes a reproduction unit that reproduces at least a part of image data of an image content in a shorter time than a reproduction time of the image content; and a display control unit that controls a display screen to display reproduction state information on a state of reproduction of the image data by the reproduction unit in an associated manner with identification information to identify the image content.

Moreover, an image display method according to claim 9 includes a reproducing step of reproducing at least a part of image data of an image content in a shorter time than a reproduction time of the image content; and a displaying step of displaying reproduction state information on a state of reproduction of the image data at the reproducing step in an associated manner with identification information to identify the image content.

An image display program according to claim 10 causes a computer to execute a reproducing step of reproducing at least a part of image data of an image content in a shorter time than a reproduction time of the image content; and a displaying step of displaying reproduction state information on a state of reproduction of the image data at the reproducing step in an associated manner with identification information to identify the image content.

### BRIEF DESCRIPTION OF DRAWINGS

Fig. 1 is a block diagram of a functional configuration of an image display apparatus according to an embodiment of the present invention;
Fig. 2 is a flowchart of a process in an image display method according to the embodiment of the present invention;
Fig. 3 is a block diagram of a hardware configuration of an image display apparatus according to a present example;
Fig. 4 is a block diagram of a functional configuration of the image display apparatus according to the present embodiment;
Fig. 5 is an explanatory diagram illustrating a case in which a reproduction state of an image content is expressed by a binary code;
Fig. 6 is an explanatory diagram illustrating a case in which a reproduction state of an image content is expressed by a multiple code;
Fig. 7 is an explanatory diagram illustrating a list of recorded programs;
Fig. 8 is an explanatory diagram illustrating a list of programs after summary reproduction has been performed;
Fig. 9 is an explanatory diagram illustrating a state in which information indicating an unreproduced state is displayed on a thumbnail;
Fig. 10 is an explanatory diagram illustrating a state in which information indicating a digest reproduced state is displayed on a thumbnail;
Fig. 11 is a flowchart of a process in summary reproduction;
Fig. 12 is an explanatory diagram illustrating a plurality of reproduction states including reproduction time;
Fig. 13 is a flowchart of a process of summary reproduction when summary reproduction state is classified into stages and displayed for each of the stages;
Fig. 14 is an explanatory diagram illustrating a screen to specify a preference level and a processing to an image content;
Fig. 15 is an explanatory diagram illustrating a status list of reproduction states including evaluations by a viewer; and
Fig. 16 is a flowchart of a process of summary reproduction when input evaluations are reflected in reproduction states.

### EXPLANATIONS OF LETTERS OR NUMERALS

- 101: Reproduction unit
- 102: Display screen
- 103: Display control unit
- 104: Input unit
- 105: Changing unit
- 106: Storage unit
- 107: Deleting unit
- 108: Determining unit
- 403: Content DB
- 404: Reproduction processing unit
- 405: Summary creating unit
- 406: OSD signal creating unit
- 407: Display synthesizing unit
- 409: Control unit
- 410: Related information DB

### BEST MODE(S) FOR CARRYING OUT THE INVENTION

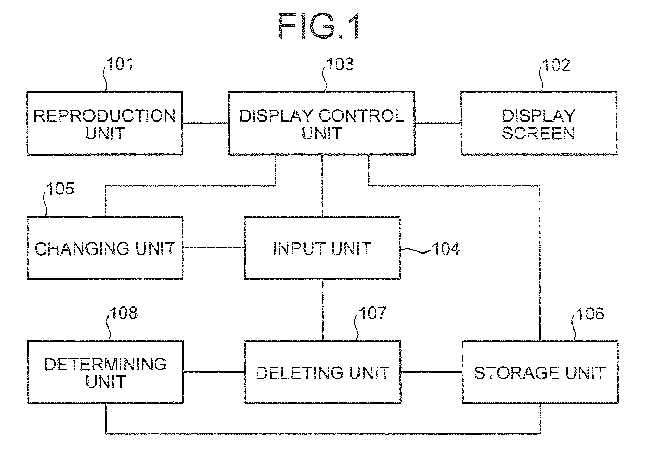

Exemplary embodiments of an image display apparatus, an image display method, and an image display program according to the present invention will be explained in detail below with reference to the accompanying drawings. First, a functional configuration of an image display apparatus according to an embodiment of the present invention is explained. Fig. 1 is a block diagram of the functional configuration of the image display apparatus according to the embodiment of the present invention. The image display apparatus according to the present embodiment includes a reproduction unit 101, a display screen 102, a display control unit 103, an input unit 104, a changing unit 105, a storage unit 106, a deleting unit 107, and a determining unit 108.

The reproduction unit 101 reproduces at least a part of the image data in a shorter period of time than the reproduction time for the image content in its entirety. The image content herein includes, for example, electronic image data such as movies, music concert footage, commercially available documentary images, recorded footage of a television program, video shot by a video camera, and image information of map data to be displayed on a navigation device.

If the image content is of a television program, the image content is received from a television broadcast network and can be recorded on a recording medium such as a hard disk in the image display apparatus. The recorded image content can be reproduced by drive controlling a hard disk drive.

Moreover, if the image content is recorded on an optical disk such as a DVD, the image content can be reproduced by putting the optical disk in the image display apparatus and by drive controlling an optical disk drive.

Furthermore, if the image content is stored on a server on a network such as the Internet, the image content can be downloaded from the server and stored on a recording medium such as the hard disk in the image display apparatus. The recorded image content can be reproduced by drive controlling the hard disk drive. If the image content is streaming content, the streaming image from the server can be buffered and reproduced by the image display apparatus.

In addition, the above image data includes a summary image that is a summary of the image content, such as data from first several minutes or the last several minutes that is extracted in a summarized manner. Moreover, the image data can be created in the image display apparatus or can be externally obtained with the image content.

In such a case, the image data can be obtained from a television broadcast network, obtained from an optical disk such as a DVD, obtained by downloading from a server, or obtained as a streaming image. Specifically, the reproduction time of the image content is the total recording time of the image content. Hence, for example, if the image content is a one-hour long program, the reproduction time is one hour.

Furthermore, the reproduction unit 101 is capable of, for example, reproducing excerpted images from the summary image, or reproducing images at a higher reproduction speed than a given reproduction speed. Accordingly, the image data can be reproduced in a shorter period of time than the reproduction time of the image content. The given reproduction time is, for example, a normal reproduction speed for which no specific setting is made for the image content, and can be set to be the same speed as the recording speed at which the image content was recorded.

The display screen 102 displays, for example, information such as the image content itself and the title of the image content (program name in the case of a television program). The display screen 102 can be a CRT, a TFT liquid crystal display, or a plasma display. Moreover, if the image display apparatus is a computer, the display screen 102 can be the screen of a display connected to the computer.

The display control unit 102 controls the display screen 102 to display reproduction state information regarding the reproduction state of image data associated with identification information identifying the image content. The reproduction state information may include reproduction-completion information indicating that the image data has been reproduced by the reproduction unit 101. For example, if image content has not yet been reproduced, after the image data reproduced, the production-completion information is displayed. Therefore, it becomes possible for a viewer to recognize that the image data is image content that has been reproduced. Furthermore, after the image data is reproduced, on the display screen indication that the image content had been un-reproduced content may be displayed.

Moreover, the reproduction state information can include reproduction time information regarding a time during which the image data is reproduced by the reproduction unit 101. The reproduction time information may indicate an elapsed time from a point at which the reproduction of the image data is started to a point at which the reproduction of the image data is completed. For example, if the time during which the image data is reproduced is one minute, the indicated information is one minute.

The above identification information includes a title of the image content and a displayed thumbnail of the image content. In addition, information on a time of recording of the image content and information on performers appearing in the image content may be included. Moreover, the display control unit 103 can display the identification information as a list of program names on the display screen 102, and can display the reproduction state information beside each of the displayed program names.

Configuration can be such that the identification information is displayed in a form of a thumbnail on the display screen 102 and the reproduction state information is displayed on the thumbnail. Moreover, the identification information can be displayed in a different color on the display screen 102 depending on the reproduction state. Furthermore, for example, in the case where the image content is specified by a mouse operated pointer, the display control unit 103 can be configured to display the reproduction state information when the mouse operated pointer points at image content for which image data has been reproduced. Moreover, information indicating that high-speed fast-forward reproduction has been performed can also be displayed.

The input unit 104 accepts an input of a preference level regarding content of image data. The preference level herein specifically is evaluation related information of the viewer indicating preferences the viewer has for the image data, and includes, for example, information expressing image data preference in three levels: "interesting", "average", and "boring". The preference level may not necessarily be expressed in three levels, but may be expressed in more levels adding evaluations such as "a little interesting" and "a little boring". The input preference level is displayed by the display control unit 103 on the display screen 102. For example, the information expressing "interesting", "average", or "boring" can be displayed near the display of the reproduction state information.

The changing unit 105 changes the preference level based on elapsed time when the preference level is input by the input unit 104. The elapsed time may be counted from the point when the preference level is input or from the point when the image content is recorded. Furthermore, the elapsed time may also be counted from the point when image data reproduction is instructed, or from the point when the image content is obtained. The elapsed time may be a difference between a starting time and an ending time of the elapsed time.

Moreover, the elapsed time may be a time up to the current time, or a time remaining until a timer is set to finish timing at a predetermined point of time. Furthermore, the changing unit 105 can lower the preference level from "interesting" to "average" if the image content has not been reproduced when a predetermined time has passed. The changing unit 105 can also lower the preference level from "average" to "boring", or from "interesting" to "boring". The preference level changed by the changing unit 105 can be displayed on the display screen 102.

The storage unit 106 stores image content. The storage unit 106 can be a non-volatile recordable medium such as a hard disk. The deleting unit 107 deletes the image content from the storage unit 106 based on the preference level input by the input unit 104. The deleting unit 107 can also delete the image content from a server when the image content is stored on a server connected through a network. For example, when the preference level of an image content is "boring", the deleting unit 107 deletes the image content that has been evaluated as "boring" from the storage unit 106, based on a predetermined condition.

The determining unit determines whether a remaining storage capacity is equal to or less than a predetermined capacity. The remaining storage capacity specifically is the total amount of area in which data such as image content is not stored in the storage unit 106. For example, when the image display apparatus has a hard disk having a capacity of 250 GB and the data volume of the image content stored therein is 200 GB, the remaining storage capacity is 50 GB.

In addition, if there is an area that cannot be used because of other data or programs, even if the area is not an area in which image data is stored, such an area can be excluded from the remaining storage capacity. If there is an area of 5 GB that cannot be used in the above example, 45 GB obtained by excluding 5 GB from 50 GB, which is the capacity that is not used, is the remaining storage capacity.

The predetermined capacity is a threshold capacity that is set, for example, as an insufficient amount to store image content. For example, in the above example, the predetermined capacity can be set to 15 GB. The predetermined capacity can be set to 0 GB. In the case of 0 GB setting, image content can be stored until the remaining storage capacity is completely exhausted.

When the determining unit 108 determines that the remaining storage capacity of the storage unit 106 is less than the predetermined capacity, the deleting unit 107 deletes image content whose preference level is lower than a predetermined level. Specifically, the predetermined level is a criterion for determining image data that is to be deleted, in which image content having a preference level lower than the preference level is deleted.

For example, when image contents whose preference level is "average" or higher are to be kept, the predetermined level can be set to "average". In this case, when the remaining storage capacity of the storage unit 106 is less than the predetermined capacity, image content that has a preference level evaluated as "boring" is deleted. When more than one image content that is evaluated as "boring" is present, the image content whose time of recording is earlier than others can be deleted.

Moreover, when the predetermined level is set to "interesting", both image content whose preference level is "average" and image content whose preference level is "boring" are deletable. Therefore, in this case, image content whose preference level is "boring" can be deleted first. Moreover, after the deletion of the image content whose preference level is "boring", the determining init 108 can determine again whether the remaining storage capacity of the storage unit 106 is equal to or less than the predetermined capacity. When the remaining storage capacity is equal to or less than the predetermined capacity, image content whose preference level is "average" can be deleted.

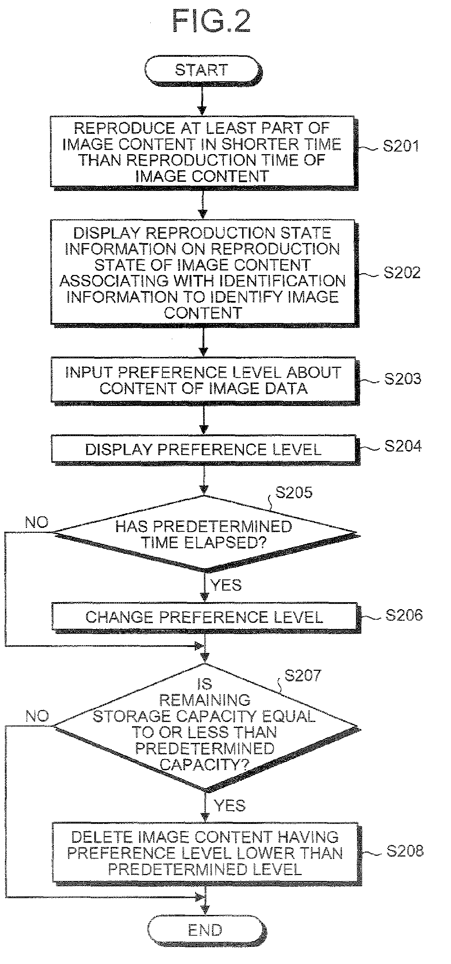

Next, a process in an image display method according to an embodiment of the present invention is explained. Fig. 2 is a flowchart of the process of the image display method. First, the reproduction unit 101 reproduces at least a part of the image data of the image content in a shorter period of time than the reproduction time for the image content in its entirety (step S201). Next, the display control unit 103 displays on the display screen 102 the reproduction state information regarding the state of reproduction of the image data by the reproduction unit 101 associated with the identification information that identifies the image content (step S202).

Therefore, a viewer can visually check the reproduction state of the image content when the image data is reproduced in a shorter period of time than the reproduction time for the entire image content. As a result, it becomes easier for the viewer to judge whether to reproduce the image content throughout the entire reproduction time. (...it becomes easier for the viewer to judge whether to reproduce (view) the image content in its entirety.)

Next, the input unit 104 receives input of the preference level for the content of the image data (step S203). The display control unit 103 displays the input preference level on the display screen 102 (step S203)

Therefore, the viewer can easily grasp the preference level for the image content whose image data has been reproduced in a shorter time than the reproduction time for the entire image content. Furthermore, it is possible to easily grasp the preference level of not only the image content whose image data has just been viewed, but also of image content whose image data had been viewed in the past. As a result, the viewer can discriminate the image contents according to the preference levels, thereby making it easy to determine which image content is to be reproduced throughout the entire reproduction time.

Next, the changing unit 105 determines whether the predetermined time has elapsed (step S205), and when the predetermined time has elapsed (step S205: YES), the changing unit 105 changes the preference level (step S206), and the process proceeds to step S207. On the other hand, when the predetermined time has not elapsed (step S205: NO), the process proceeds to step S207. Therefore, the preference level of the image content can be changed based on the elapsed time such that, for example, the preference level of image content in which only the image data has been reproduced and then has been left for a long time is lowered. Therefore, an appropriate preference level, which corresponds to the elapsed time, can be confirmed by the viewer.

Next, the determining unit 108 determines whether the remaining storage capacity of the storage unit 106 is equal to or less than the predetermined capacity (step S207). When it is determined that the remaining storage capacity is not equal to or less than the predetermined capacity (step S207: NO), a series of the process is finished. When it is determined that the remaining storage capacity is equal to or less than the predetermined capacity (step S207: YES), the deleting unit 107 deletes from the storage unit 106 image content whose preference level is lower than the predetermined level (step S208), and a series of the process is finished.

Therefore, when the remaining storage capacity of the storage unit 106 becomes equal to or less than the predetermined capacity, image content relatively unnecessary can be deleted. Specifically, just by reproducing the image data, when the remaining storage capacity of the storage unit 106 is insufficient, as required, image content whose preference level is lower than the predetermined preference level can be deleted as unnecessary image content. Therefore, the remaining storage capacity of the storage unit 106 can be sufficiently secured.

### EXAMPLE

### (Hardware Configuration of Image Display Apparatus)

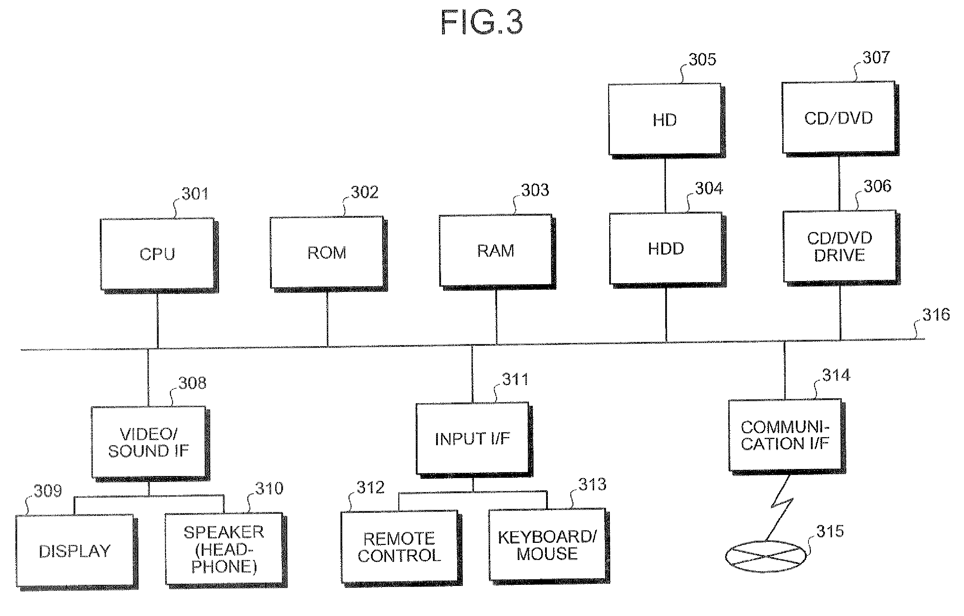

Next, an example of the image display apparatus according to the embodiment described above is explained. First, a hardware configuration of the image display apparatus according to the present example is explained. Fig. 3 is a block diagram of the hardware configuration of the image display apparatus according to the present example. As shown in Fig. 3, the image display apparatus includes a CPU 301, a ROM 302, a RAM 303, an HDD (hard disk drive) 304, an HD (hard disk) 305, a CD/DVD drive 306, a CD/DVD 307 as an example of a removable recording medium, an video/sound IF (interface) 308, a display 309, a speaker 310, an input 1/F (interface) 311, a remote control 312, a keyboard/mouse 313, and a communication 1/F (interface) 314. The respective components 301 to 314 are connected via a bus 316.

The CPU 301 controls the entire image display apparatus according to the present example. The ROM 302 stores a program such as a boot program. The RAM 303 is used as a work area of the CPU 301. The HDD 304 controls reading/writing of data from/to the HD 305 in accordance with the control of the CPU 301. The HD 305 stores data written by the control of the HDD 304.

The CD/DVD drive 306 controls reading/writing of data with respect to the CD/DVD 307 in accordance with the control of the CPU 301. The CD/DVD 307 is a removable recording medium from which data stored thereon is read out in accordance with the control of the CD/DVD drive 306. As the CD/DVD drive 306, a writable recording medium can be used. Moreover, this removable recording medium may be a CD-ROM (CD-R, CD-RW), an MO, a memory card, etc. besides the CD/DVD 307.

Furthermore, the video/sound I/F (interface) 308 is connected to the display 309 for image display and the speaker 310 (or headphone) for sound output. The display 309 displays an image, a cursor, an icon, a menu, a window, a toolbox, and various data such as a moving picture, an image, and a character. The display 309 is, for example, a CRT, a TFT liquid crystal display, a plasma display, etc., and sound is output from the speaker 310.

The input I/F 311 inputs data that is transmitted from the remote control 312 or the input key (including keyboard and mouse) 313 that has a plurality of keys to input characters, numerical values, various instructions, and the like. The input key (including keyboard and mouse) 313 has keys to input characters, numerical values, various instructions, and the like, and is manipulated by a viewer to perform data entry.

The communication I/F 314 receives image content from a television broadcast network. Moreover, the communication I/F 314 is connected to a network 315 such as the Internet wirelessly or through a communication line, and is connected to other devices through this network 315. The communication I/F 314 controls interface between the network 315 and the CPU 301, and controls input/output of image content from an external source. The network 315 includes a television broadcast network, a LAN, a WAN, a public line network, a mobile phone network, etc.

### (Functional Configuration of Image Display Apparatus)

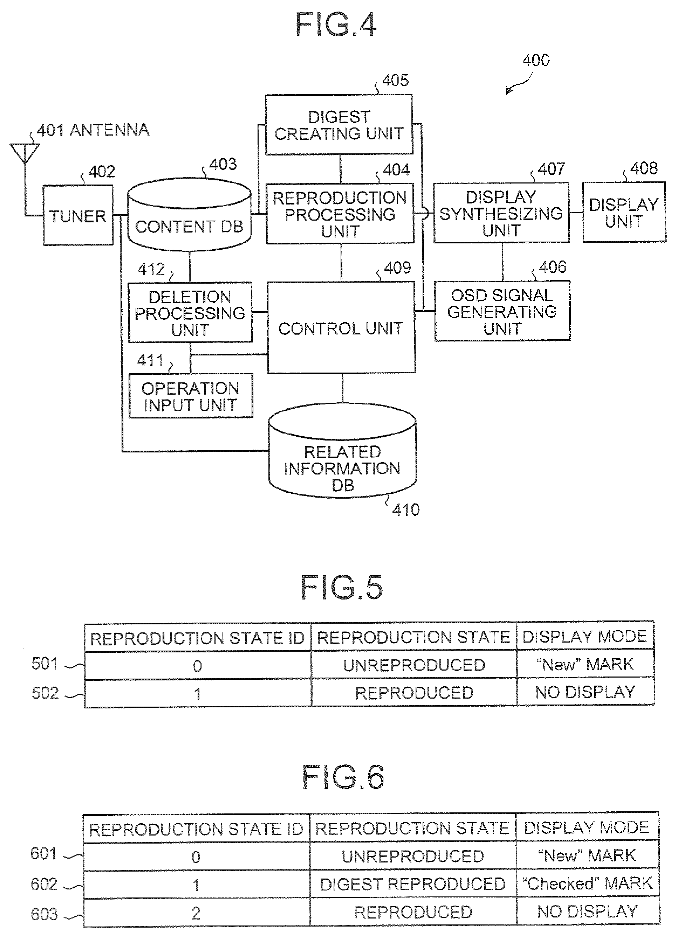

Next, a functional configuration of the image display apparatus according to the present example is explained with reference to Fig. 4. Fig. 4 is a block diagram of the functional configuration of the image display apparatus according to the present example. An image display apparatus 400 according to the present example includes an antenna 401, a tuner 402, a content DB (database) 403, a reproduction processing unit 404, a summary creating unit 405, an OSD signal generating unit 406, a display synthesizing unit 407, a display unit 408, a control unit 409, a related information DB 410, an operation input unit 411, and a deletion processing unit 412.

The antenna 401 receives a radio wave transmitted from a broadcast station. The tuner 402 obtains a baseband signal of a selected program from a television broadcast wave received by the antenna 401, and converts this baseband signal into a digital signal.

The content DB 403 is a database for recorded images and records image content received through the antenna 401 and the tuner 402. The reproduction processing unit 404 reproduces image content through the receipt and output of a reproduction signal from the content DB 403..

The summary creating unit 405 creates a summary image from the image content recorded in the content DB 403. The summary image includes extracts of only highlights of the original image content. The summary image is created by extracting feature amounts of the image content, and by determining highlights from the extracted feature amounts to be extracted. The feature amount may be a concentration of pixels.

The summary image created by the summary creating unit 405 is reproduced by the reproduction processing unit 404. The summary reproduction is to thus reproduce a summary image in a short period of time, and this summary reproduction enables a viewer to check an outline of the image content.

The summary creating unit 405 may also create image data of extracts of highlights of the original image content, or a play list describing parts to be reproduced. This summary reproduction enables viewers to efficiently check whether the image content is interesting in a short period of time.

Furthermore, the summary creating unit 405 may have a CM detecting/removing function that removes a commercial image from the image content. In this case, the summary creating unit 405 may be configured to create the summary image after removing CM from the stored image.

Moreover, the summary creating unit 405 may be configured to exclude the last approximately 20% of the image content in creating a summary image. As such, viewing of the climax in the last part is avoided in the case where the image content is a drama.

The OSD signal generating unit 406 creates an OSD (On Screen Character Display) signal that is used to display a menu and a program listing to output to the display synthesizing unit 407. In addition, the OSD signal generating unit 406 also creates marks ("New" mark, etc.) indicating a reproduction state of image content.

The display synthesizing unit 407 synthesizes a reproduction signal of the image content from the reproduction processing unit 404 and the OSD signal from the OSD signal generating unit 406 to generate a signal to perform display on the display unit 408. The display unit 408 displays contents of the image content based on the signal generated by the display synthesizing unit 404.

The control unit 409 controls the reproduction processing unit 404, the summary creating unit 405, the OSD signal generating unit 406, and the deletion processing unit 412, and performs data search in the related information DB 410. The control unit 409 instructs the summary creating unit 405 to create the summary image. Moreover, the control unit 409 searches for related information from the related information DB 410 to send to the OSD signal generating unit 406. The control unit 409 also changes the preference level recorded in the related information DB 410. Furthermore, the control unit 409 determines whether to delete an image content based on the preference level.

The related information DB 410 records various types of related information regarding the image contents recorded in the content DB 403. The related information includes program names, broadcast station names, broadcast dates, and other related information (category, performer, and location). If the image content is received from a television broadcast network, such related information is superimposed on a broadcast signal and is obtained by a program information obtaining unit not shown. Moreover, the related information DB 410 records information (unreproduced, reproduced, etc.) indicating the reproduction state of the image content.

The operation input unit 412 inputs designation of an image content to be reproduced, inputs/corrects the related information of the image content, and inputs the preference level of the image content for which the summary image is reproduced.

The deletion processing unit 412 deletes image content from the content DB 403 when the control unit 409 determines to delete the image content. The deletion processing unit 412 can delete image content from the content DB 403 also when a deletion instruction is received from the operation input unit 411. Thus, it is possible to clear, from the content DB 403, unreproduced image content that is found to be not interesting as a result of the summary reproduction.

Next, configurations for realizing each component of the above image display apparatus 400 are explained in association with each component of the image display apparatus shown in Fig. 1 and the hardware configuration shown in Fig. 3. The antenna 401 and the tuner 402 are realized by the communication I/F 314. The content DB 403 and the related information DB 410 correspond to the storage unit 106, and are realized by the HD 305. The reproduction processing unit 404 and the summary creating unit 405 correspond to the reproduction unit 101.

The OSD signal generating unit 406 and the display synthesizing unit 407 correspond to the display control unit 103. The display unit 408 corresponds to the display screen 102 and is realized by the video/sound I/F 308 and the display 309. The operation input unit 411 corresponds to the input unit 104, and is realized by the input I/F 311, the remote control 312, and the keyboard/mouse 313. The deletion processing unit 412 corresponds to the deleting unit 107.

The functions of the reproduction processing unit 404, the summary creating unit 405, the OSD signal generating unit 406, the display synthesizing unit 407, and the deletion processing unit 412 are realized by executing a program recorded on a recording medium such as the ROM 302, the RAM 303, the HD 305, the CD/DVD 307 shown in Fig. 3, by the CPU 301, the ROM 302, and the RAM 303.

The image display apparatus 400 can be applied to a DVD+HDD recorder (hereinafter, "recorder") as one example. Such a recorder is rapidly spreading, replacing the conventional VTR that records broadcast programs on a tape. The recorder affords excellent access to image content and easy management of image contents. The recorder can be equipped with an electronic program listing called EPG (Electronic Program Guide). It is possible to easily set program recording just by selecting a desired item from the program listing displayed on a screen.

The image display apparatus 400 may have a function to search for a program from the EPG that corresponds to a keyword designated by a viewer and automatic recording of the program. Alternatively, the image display apparatus 400 may have a learning function to learn viewer preferences from the operation of the apparatus; and automatic recording of a program that corresponds to the viewer preferences. In this case, the viewer can easily program the recording of a desired program, or a program that corresponds to the preference of the viewer can be automatically recorded. Therefore, the viewer can enjoy image contents accumulated in the image display apparatus 400 any time.

Next, a change of the reproduction state IDs before and after the summary reproduction is explained. Fig. 5 is an explanatory diagram illustrating a case in which the reproduction state of image content is expressed by a binary code. The reproduction state ID is recorded in the related information DB 410 shown in Fig. 4. An "unreproduced" state and a "reproduced" state are discriminated by two values indicated by the reproduction state ID. For a status 501, the reproduction state ID is 0 which indicates an unreproduced state, and a "New" mark is displayed on the screen. For a status 502, the reproduction state ID is 1 which indicates a reproduced state, and no mark is displayed on the screen.

On the other hand, Fig. 6 is an explanatory diagram illustrating a case in which a reproduction state of image content is expressed by a multiple code. This reproduction state ID is recorded in the related information DB 410 shown in Fig. 4. Three values indicated by the reproduction state ID discriminate a "summary reproduced" state. For a status 601, the reproduction state ID is 0 which indicates an unreproduced state, and a "New" mark is displayed on the screen. For a status 602, the reproduction state ID is 1 which indicates a summary reproduced state, and a "Checked" mark is displayed on the screen. For a status 603, the reproduction state ID is 2 that indicates a reproduced state, and no mark is displayed on the screen.

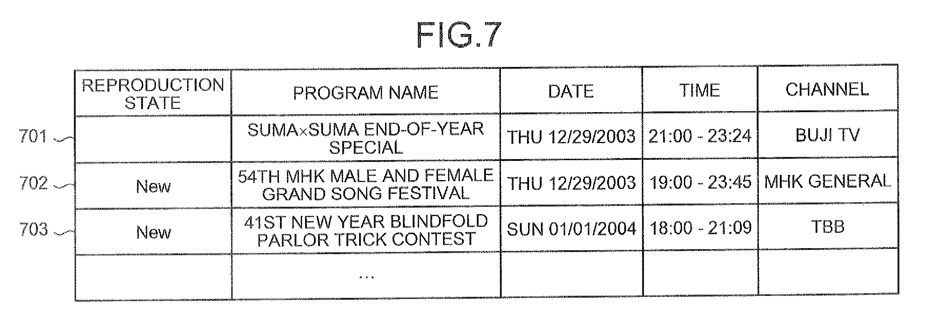

Next, a change in display of the list of programs before and after the summary reproduction is explained. First, the list of programs before the summary reproduction is explained. Fig. 7 is an explanatory diagram illustrating a list of recorded programs. Program information 701 to 703 constituting this list of programs includes program names of image contents, date of recording, and names of broadcast stations that are displayed in an associated manner.

The program information 701 is of a program that has been reproduced, and shows that the name of the program is "SUMAxSUMA YEAR-END SPECIAL", the date of recording is "THU 12/29/2003", the recording time is "21:30-23:23", and the channel is "BUJI TV". Since it has been reproduced, the reproduction state section is empty.

The program information 702 is of a program that has not been reproduced, and shows that the program name is "54TH MHK MALE AND FEMALE GRAND SONG FESTIVAL", the recording date is "THU 29/12/2003", the recording time is "19:00-23:45", and the channel is "MHK GENERAL". Since it has not been reproduced, "New" is displayed in the reproduction state section.

The program information 703 is of a program that has been reproduced, and shows that the program name is "41ST NEW YEAR BLINDFOLD PARLOR TRICK CONTEST", the date of recording is "SUN 01/01/2004", the recording time is "18:00-21:09", and the channel is "TBB". Since it has not been reproduced, "New" is displayed in the reproduction state section.

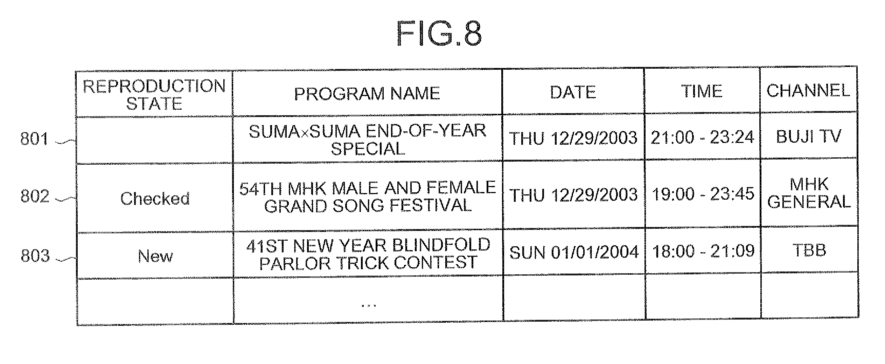

Next, the list of programs after the summary reproduction is explained. Fig. 8 is an explanatory diagram illustrating a list of programs after summary reproduction has been performed. This list of programs includes program information 802 after the content of the program information 702 is changed, in addition to the content of the program information 701 and 703. After summary reproduction has been performed for the image content indicated by the program information 702, information indicating that the digest has been reproduced is displayed as the program information 802.

Program information 801 is of a program that has been reproduced, and shows that the program name is "SUMAxSUMA YEAR-END SPECIAL", the date of recording is "THU 12/29/2003", the recording time is "21:30-23:23", and the channel is "BUJI TV". Since it has been reproduced, the reproduction state section is empty.

The program information 802 is of a program for which the summary reproduction has been performed, and shows that then program name is "54TH MHK MALE AND FEMALE GRAND SONG FESTIVAL", the recording date is "THU 29/12/2003", the recording time is "19:00-23:45", and the channel is "MHK GENERAL". Since the digest has been reproduced, "Checked" is displayed in the reproduction state section.

Program information 803 is of a program that has not been reproduced, and shows that the program name is "41ST NEW YEAR BLINDFOLD PARLOR TRICK CONTEST", the date of recording is "SUN 01/01/2004", the recording time is "18:00-21:09", and the channel is "TBB". Since it has not been reproduced, "New" is displayed in the reproduction state section.

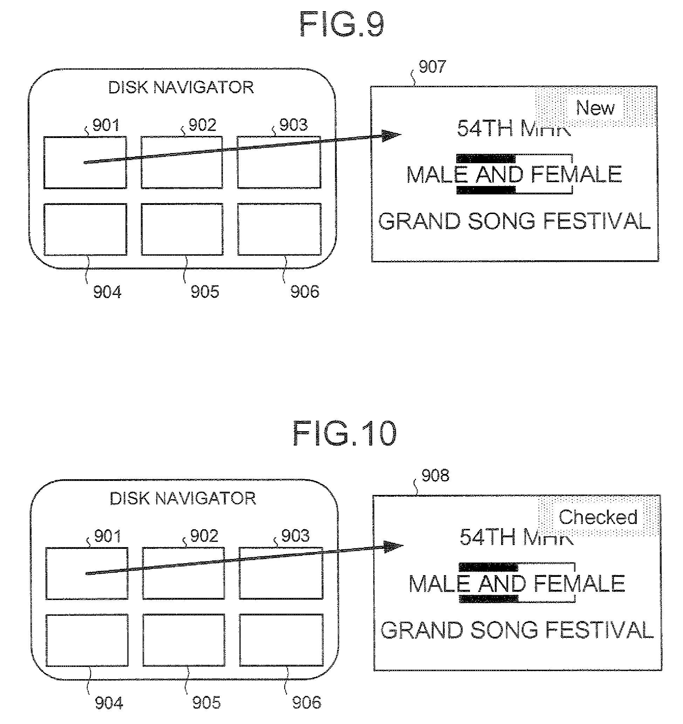

A screen for selecting image content is displayed based on the reproduction state shown in Fig. 6. First, this selection screen is described for a screen display indicating an unreproduced state. Fig. 9 is an explanatory diagram illustrating a state in which information indicative of the unreproduced state is displayed on a thumbnail. In the example shown in Fig. 9, thumbnails 901 to 906 each indicating one image content are displayed. On the thumbnail 901 which indicates image content that has not been reproduced, "New" is displayed as shown in an enlarged thumbnail, a thumbnail 907.

When the summary reproduction has been performed for the image content indicated by the thumbnail 907, information indicating that the summary reproduction has been performed is displayed. A screen display when the summary reproduction has been performed is explained. Fig. 10 is an explanatory diagram illustrating a state in which information indicative of a reproduced summary state is displayed on the thumbnail. On the thumbnail 901, "Checked" is displayed as shown in an enlarged thumbnail 908. If the image contents have been reproduced, such information is not displayed. In this way, a detailed display according to the viewing state of a viewer is possible.

Next, a process when the display screen shown in Fig. 9 changes to the display screen shown in Fig. 10 is explained.
(1) The thumbnail 901 is selected from among the thumbnails 901 to 906 in the list of thumbnails shown in Fig. 9. As indicated by the thumbnail 907, the thumbnail 901 displays a thumbnail indicating the unreproduced image content of "54TH MHK MALE AND FEMALE GRAND SONG FESTIVAL", along with the "New" mark. For the image content indicated by the thumbnail 901, the summary reproduction is performed.
(2) At this time, the reproduction state of the "54TH MHK MALE AND FEMALE GRAND SONG FESTIVAL" is changed from "unreproduced" to "summary reproduced".
(3) The "New" mark displayed on "54TH MHK MALE AND FEMALE GRAND SONG FESTIVAL" on the list of thumbnails is replaced with "Checked" that indicates that the summary reproduction has been performed and is displayed as shown by the thumbnail 908 in Fig. 10.

While in this example, the unreproduced state is expressed as "New" and the digest reproduced state is expressed as "Checked", configuration may be such that the unreproduced state is expressed as "SHIN" and the digest reproduced state is expressed as "CHECK". Other than these characters, the unreproduced state and the summary reproduced state can be distinguished by not only characters but also by symbols/colors, colors/decoration of the frame of the thumbnail, or sizes/color tones/monochrome displays, thereby enabling display in such a manner that a viewer can easily recognize the states.

Moreover, configuration can be such that even after the summary reproduction, the reproduction state is still displayed as unreproduced, i.e., the "New" mark is displayed, or such that after the summary reproduction, the reproduction state is displayed as reproduced. While the case in which the list of thumbnails is displayed has been explained, the list of thumbnails can be replaced with, for example, a text list in a table form. In this case, the contents of respective image contents are displayed being aligned on each line. For image content that has not been reproduced is distinguished, for example, with the characters "New" being displayed at the left end of the line. On the other hand, image content for which the summary reproduction has been performed is distinguished with the characters "Checked" being displayed at the left end of the line.

Moreover, a thumbnail (key frame) corresponding to a part of the image content to be reproduced can be prepared and displayed in a list (key frame list). Furthermore, configuration can be such to enable cancellation of the reproduction partway through the summary reproduction, i.e., while the summary reproduction is performed. In this case, the image content can be handled as if the summary reproduction has been performed, or as if the summary reproduction has not been performed.

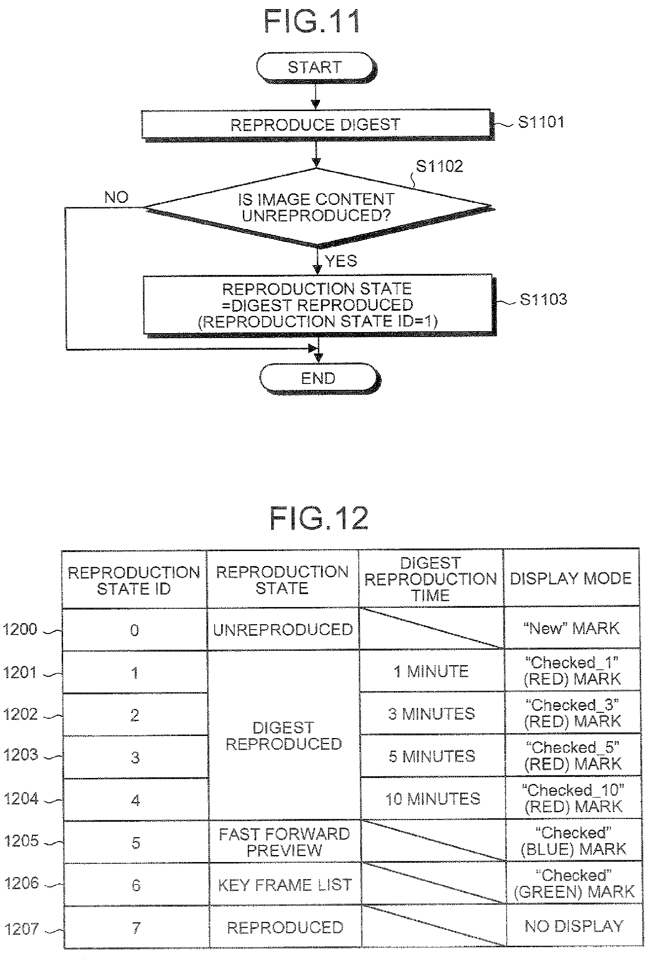

Next, a process at the time of summary reproduction is explained. Fig. 11 is a flowchart of the process when the summary reproduction according to the present example is performed. Explanation will be given with reference to the block diagram shown in Fig. 4. First, the summary reproduction is performed (step S1101). The summary creating unit 405 creates a summary image of the image content and sends the created summary image of the image content to the reproduction processing unit 404, and the reproduction processing unit 404 outputs reproduction signals.

Next, the control unit 409 determines whether the image content is unreproduced (step S1102). When the image content has already been reproduced (step S1102: NO), a series of the process is finished. When the image content has not been reproduced (step S1102: YES), the control unit 409 re-writes the reproduction state ID recorded in the related information DB 410, to record that the summary reproduction has been performed in the related information DB 410 (step S1103). When the recording is completed, a series of the process is finished.

According to the example explained above, display based on the reproduction state of image contents including the summary reproduction is performed, thereby enabling a viewer to recognize the reproduction state of each image content at a glance. The reproduction state of image content is expressed not only by the two values of unreproduced/reproduced, but also with consideration of the summary reproduced state, the related information that corresponds to the actual state can be displayed.

While the list of programs described above displays the time and date of recording and the broadcast station name besides the program name, the list of programs may be displayed in a sorted manner. For example, the list of programs can be sorted according to reproduction state. In this case, the sorting order can be arranged such that a program for which only the summary reproduction has been performed appears in the top position of the list, a program that has not been reproduced appears in the second position, and a program that has been reproduced appears at the bottom.

In the case of the list of programs shown in Fig. 8, is the programs are displayed in the order of the program information 802, the program information 803, and the program information 801 from the top. Other than this order, the order may be such that the unreproduced program appears at the top and the summary reproduced program appears second. In this case, the programs are displayed in the order of the program information 803, the program information 802, and the program information 801 from the top.

Furthermore, while information for only three programs are presented in the case of the list of programs shown in Fig. 8, in reality many images are thought to be recorded. In this case, when the number of images that not been reproduced and are indicated by the program information 803 and the number of images that have only had the summary reproduced and are indicated by the program information 802 reach a predetermined number, display may be changed. For example, the unreproduced image content is displayed in white, the reproduced image content is displayed in blue, and the reproduced summary image content is displayed in white at first and when the number of the images of the reproduced summary image content reaches the predetermined number, its display is changed to red.

Next, a display method based on multiple types of reproduction modes is explained. It is assumed that multiple types of summary reproduction modes are applied. Fig. 12 is an explanatory diagram illustrating a plurality of reproduction states including reproduction time.

A status 1200 is indicated to have a reproduction state ID of 0, to be in the unreproduced state, and has a "New" mark for the display mode. Statuses 1201 to 1204 are indicated to have the reproduction state IDs 1 to 4 respectively, to be in the summary reproduced state, and to have summary reproduction times of 1 minute, 3 minutes, 5 minutes, and 10 minutes, respectively. The display modes of the statuses 1201 to 1204 are indicated by a "Checked_1" mark, a "Checked_3" mark, a "Checked_5" mark, and a "Checked_10" mark, and the display color is red for all of them. The display colors may be varied according to the summary reproduction time.

A status 1205 shows a case where only fast-forward preview is performed. The display mode is indicated by the "Checked" mark, and the display color is blue. A status 1206 shows a case where only a key frame listing has been performed. The display mode is indicated by the "Checked" mark and the display color is green. A status 1207 shows that reproduction has been performed and the display mode indicates no display.

Since image contents for which the summary reproduction has been performed are classified into the statuses 1201 to 1204, depending on available time, a viewer can select the summary reproduction time from among 1 minute, 3 minutes, 5 minute, and 10 minutes. In addition, as another method of the summary reproduction, a method by the fast-forward reproduction can be applied. In this case, either the entire image content or only a part wished to be checked can be previewed. Furthermore, as a method for checking the content, the key frame listing can be applied.

In the case of the key frame listing, the level of understanding the content by a viewer varies depending on the selected digest method, and the degree a viewer requires further checking can also vary. Meanwhile, it is possible to record and present to a viewer not only whether the summary reproduction has been performed but also what type of summary reproduction has been performed. As a result, the apparatus becomes easier for a viewer to use.

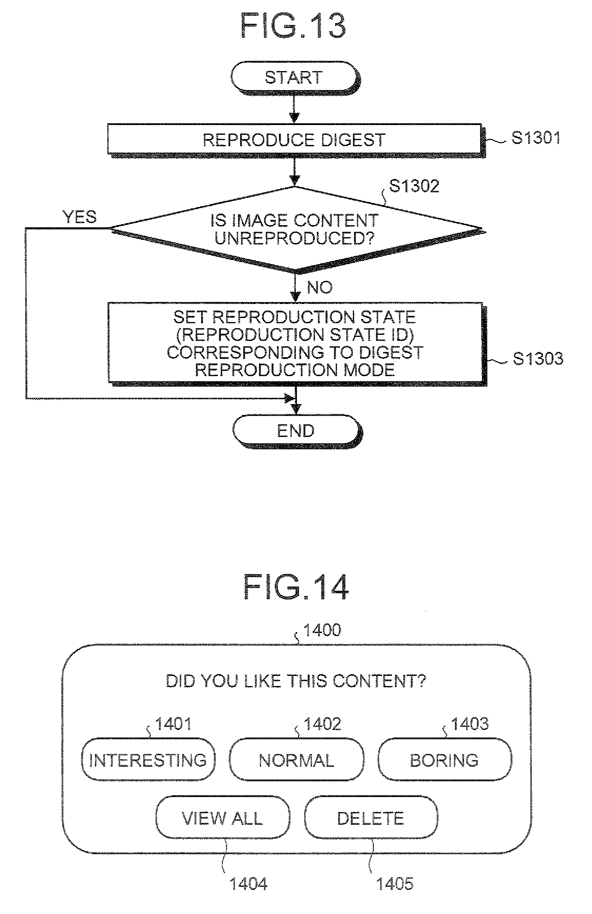

Next, the case is explained in which the summary reproduction state is classified into stages and displayed for each of the stages. Fig. 13 is a flowchart of a process of the summary reproduction when the summary reproduction state is classified into the stages and displayed for each of the stages. Explanation will be given with reference to Fig. 4.

First, the reproduction processing unit 404 performs the summary reproduction (step S1301). Specifically, the summary reproduction is started in response to an input from the operation input unit 411, and the summary creating unit 405 creates a summary image of image content and sends the created image of the image content to the reproduction processing unit 404. The reproduction processing unit 404 outputs a reproduction signal.

Next, the control unit 409 determines whether the image content has been reproduced (step S1302). When the image content has been reproduced (step S1302: YES), a series of the process is finished. When the image content has not been reproduced (step S1302: NO), the reproduction state ID is re-written corresponding to the summary reproduction method (step S1303).

Referring to Fig. 12, step S1303 is explained. When the summary reproduction time is 1 minute, the reproduction state ID is set to "1", and the "Checked 1" mark is displayed in red. When the summary reproduction time is 3 minutes, the reproduction state ID is set to "2", and the "Checked_3" mark is displayed in red. When the summary reproduction time is 5 minutes, the reproduction state ID is set to "3", and the "Checked_5" mark is displayed in red. When the summary reproduction time is 10 minutes, the reproduction state ID is set to "4", and the "Checked_10" mark is displayed in red. When the fast-forward preview is performed, the reproduction state ID is set to "5", and the "Checked" mark is displayed in blue. When the key frame listing is performed, the reproduction state ID is set to "6", and the "Checked" mark is displayed in green. After re-writing, a series of the process is finished.

As described above, management of the reproduction modes with the reproduction IDs and reflection of reproduction states in the display enable a viewer to recognize from a program list differences in the level of understanding of image content based on the reproduction method, and can easily understand whether further content check is necessary.

Next, a case where the reproduction state is displayed based on the preference level of a viewer is explained. The preference level (interesting/normal/boring etc.) of a viewer about image content after the summary reproduction is performed may be inputs and the input preference level may be recorded and displayed. Alternatively, after the summary reproduction, processing for this image content (such as, view the entire contents from the beginning, or delete, etc.) may be input.

First, the input operation of the preference level by a viewer is explained. Fig. 14 is an explanatory diagram illustrating a screen to specify a preference level and a processing for image content. The preference level of a viewer is input by selecting display buttons 1401 to 1403 in a dialog box 1400 for viewer evaluation input. A processing for the image content is designated by inputting selection of a display button 1404 or 1405.

When the display button 1401 is selected, the preference level is set to "interesting", when the display button 1402 is selected, the preference level is set to "average", and when the display button 1403 is selected, the preference level is set to "boring". When the display button 1404 is selected, the processing for the image content is designated as "view the entire content", and when the display button 1405 is selected, the processing for the image content is designated as "delete".

As a result, after viewing, i.e., when the impression is clear, evaluation of the image content can be recorded. By recording and displaying this viewer evaluation as an element of the reproduction state, the apparatus becomes easier for a viewer to use.

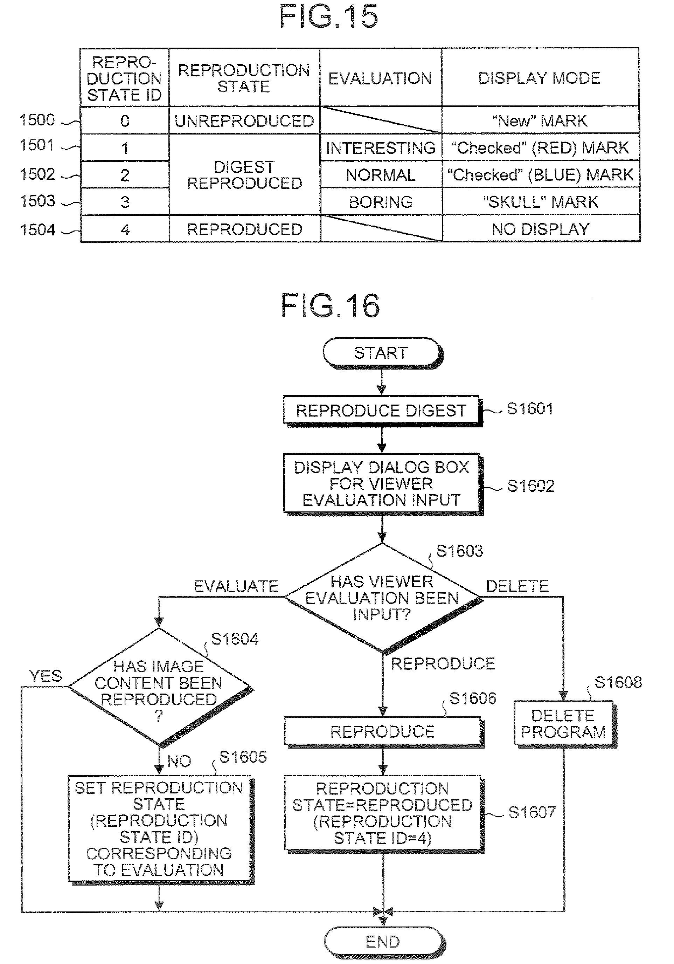

Next, the reproduction state including the viewer evaluation is explained. Fig. 15 is an explanatory diagram illustrating a status list of the reproduction states including evaluations by a viewer. A status 1500 is indicated to have a reproduction state ID of 0, to be in the unreproduced state, and has a "New" mark for the display mode. Statuses 1501 to 1503 are indicated to have reproduction state IDs of 1 to 3, respectively, and to all be in the summary reproduced state.

Evaluation corresponding to each of the statuses 1501 to 1503 is "interesting", "average", and "boring", respectively. The display modes are "Checked" with the display color of red, "Checked" with the display color of blue, and a "skull" mark, respectively. The status 1504 is in the reproduced state, and there is no display for the display mode.

In other words, when the image contents are displayed in a list, a program that is regarded as interesting (=of interest) as a result of the summary reproduction can be recognized at a glance, thereby being an important factor to determine which image content should be viewed. In a similar manner, a program that is regarded as boring, in other words, not of interest, as a result of the summary reproduction can also be recognized at a glance, thereby enabling boring image content to be set at the lowest viewing priority.

As for image content for which entire reproduction is performed as a processing after the summary reproduction, there is no display for the display mode; and deleted image content has already been erased. Therefore, it is not necessary to set the display mode for image content that has been reproduced and/or deleted.

While three types of viewer evaluations, and two types of processing after the summary reproduction have been described as examples, indexes of the evaluation can be artistry, image quality, production time, location, performers, and other categories that are input by a viewer. Moreover, as processing after the summary reproduction, quick view (high-speed reproduction to the extent that sound is audible) and storage for a predetermined period (for example, storage for one week and then automatic deletion) can be considered.

Furthermore, the viewer evaluation and the processing for image content after the summary reproduction can be used for learning of preferences of the viewer. In other words, the related information DB 410 holds information on the preference level for each of the categories. When "interesting" or "view the entire content" is selected, the preference level for the category of the selected image content is raised. On the other hand, when "boring" or "delete" is selected, the preference level for the category of the image content is lowered.

It may be considered that the smaller the value of the reproduction state ID is, the higher priority the image content has to be left in the content DB 403 shown in Fig. 4. Conversely, the larger the value of the reproduction state ID is, the less necessity the image content has to be left. Therefore, image content having a lower value of the reproduction state ID is given priority for automatic deletion or is listed on the top among deletion candidates. Such content can also be the image content for which summary reproduction has been performed, but low viewer evaluation is input and a predetermined time elapses without being the image content being reproduced in its entirety, or it may be image content for which no summary reproduction is performed.

Next, a process is explained in a case where the input evaluation is reflected in the reproduction state. Fig. 16 is a flowchart of the process of the summary reproduction when the input evaluations are reflected in the reproduction states. This process is explained with reference to the block diagram shown in Fig. 4.

First, the summary reproduction is performed (step S1601). Specifically, the summary creating unit 405 creates a summary image of image content, the created summary image of the image content is sent to the reproduction processing unit 404, and the reproduction processing unit 404 outputs a reproduction signal.

Next, the OSD signal generating unit 406 displays the dialog box 1400 for viewer evaluation input shown in Fig. 14 (step S1602). The operation input unit 411 inputs the viewer evaluation (step S1603). The viewer checks a title list displayed on the screen and determines which program to reproduce, to reproduce a summary, or to delete, and inputs the determination through the operation input unit 411. When deletion of image content is instructed (step S1603: DELETE), the deletion processing unit 412 deletes the program corresponding to the image content from the content DB 403 (step S1608), and a series of the process is finished.

When evaluation is instructed (step S1603: EVALUATE), the control unit 409 determines whether the image content has been reproduced (step S1604). When the image content has been reproduced (step S1604: YES), a series of the process is finished.

When the image content has not been reproduced (step S1604: NO), the control unit 409 sets the reproduction state ID to be recorded in the relation information DB 410 corresponding to the input evaluation (step S1605). With reference to Fig. 14, when selection of the display button 1401 indicating "interesting" is input, the reproduction state ID is 1. When selection of the display button 1402 indicating "average" is input, the reproduction state ID is 2. When selection of the display button 1403 indicating "boring" is input, the reproduction state ID is 3.

When the recording is completed, a series of the process is finished. When reproduction instruction is input (step S1603: REPRODUCE), the reproduction processing unit 404 reproduces the designated image content (step S1606), the control unit 409 re-writes the reproduction state ID of the designated image content to 4 indicating the reproduced state (step S1607). A series of the process is then finished.

As described above, the management and the display of the viewer evaluations of the image content as one element of the reproduction state enables a viewer to easily recognize differences in preference for each image content at the listing of the recorded programs.

The image display apparatus explained in the present example can be implemented by executing a program prepared in advance by a computer such as a personal computer and a work station. This program is recorded on a computer-readable recording medium such as a hard disk, a flexible disk, a CD-ROM, an MO, and a DVD, and is executed by being read by the computer from the recording medium. This program can be a transmission medium that can be distributed through a network such as the Internet.

## Claims

1. An image display apparatus comprising:
a reproduction unit that reproduces at least a part of image data of an image content in a shorter time than a reproduction time of the image content; and
a display control unit that controls a display screen to display reproduction state information on a state of reproduction of the image data by the reproduction unit in an associated manner with identification information to identify the image content.

2. The image display apparatus according to claim 1, wherein the reproduction unit reproduces at a reproduction speed higher than a predetermined reproduction speed.

3. The image display apparatus according to claim 1, wherein the reproduction state information includes reproduction completion information indicating that the image data has been reproduced by the reproduction unit.

4. The image display apparatus according to claim 1, wherein the reproduction state information includes information on a time for which the image data is reproduced by the reproduction unit.

5. The image display apparatus according to any one of claims 1 to 4, further comprising an input unit that accepts an input of a preference level about a content of the image data, wherein
the display control unit displays the preference level input by the input unit.

6. The image display apparatus according to claim 5, further comprising a changing unit that changes the preference level based on an elapsed time since the preference level is input by the input unit, wherein
The image display unit displays the preference level changed by the changing unit on the display screen.

7. The image display apparatus according to claim 5, further comprising a deleting unit that deletes the image content based on the preference level input by the input unit.

8. The image display apparatus according to claim 7, further comprising:
a storage unit that stores the image content; and
a determining unit that determines whether a remaining storage capacity of the storage unit is equal to or less than a predetermined capacity, wherein
the deleting unit deletes, when the determining unit determines that the remaining storage capacity is equal to or less than the predetermined capacity, an image content having the preference level lower than a predetermined level from the storage unit.

9. An image display method comprising:
a reproducing step of reproducing at least a part of image data of an image content in a shorter time than a reproduction time of the image content; and
a displaying step of displaying reproduction state information on a state of reproduction of the image data at the reproducing step in an associated manner with identification information to identify the image content.

10. An image display program that causes a computer to execute:
a reproducing step of reproducing at least a part of image data of an image content in a shorter time than a reproduction time of the image content; and
a displaying step of displaying reproduction state information on a state of reproduction of the image data at the reproducing step in an associated manner with identification information to identify the image content.
